# EUROPEAN PATENT APPLICATION

(11) **EP 1 227 688 A1**
(43) Date of publication of application: **31.07.2002**
(21) Application number: 01963428.6
(22) Date of filing: 05.09.2001
(51) Int. Cl.: H04Q 7/00

(54) **POSITION REGISTRATION METHOD, INFORMATION DISTRIBUTION METHOD, MOBILE COMMUNICATION NETWORK, AND MOBILE COMMUNICATION TERMINAL**

(30) Priority: 06.09.2000 JP 2000270714
(71) Applicant: NTT DoCoMo, Inc., Tokyo 100-6150 (JP)
(72) Inventor: OGASAWARA, Koichi, Chigasaki-shi, Kanagawa 253-0025 (JP)
(74) Representative: HOFFMANN - EITLE
(86) International application number: PCT/JP01/07685
(87) International publication number: WO 02/21862

(57) **Abstract**

An ID signal indicating a base station ID is broadcasted by a base station 21 sited in a specific area of a location registration area. When receiving the ID signal, a mobile station 10 located in the radio zone of the base station 21 transmits to the base station 21 a location registration request signal including the base station ID and a mobile station ID. The base station ID and the mobile station ID are registered in a home memory 23 as narrow-area location registration information. An IP server 40a acquires location related information from a location-related information data base 41a and transmits it to a gateway server 25. The gateway server 25 specifies a destination of transmission for the received location related information by referring to the home memory 23 and transmits the location related information to the mobile station 10.

## Description

### Technical Field

The present invention relates to a location registration method for a mobile communications terminal, an information distribution method for distributing information to the terminal and a mobile communications network, and a mobile communications terminal which are used in those methods.

### Background Art

Recently, cellular type mobile communications networks serving mobile communications terminals such as portable telephones have spread widely.

This type of mobile communications network needs to grasp the current location of a portable telephone in order to call the portable telephone at the time of incoming calls. For this purpose, a location registration process for the portable telephone is executed.

In the location registration process, a location of a portable telephone is registered in a unit of an area having multiple radio zones gathered (hereinafter called a location registration area), the area having a radius of several hundred meters to several kilometers and being formed by base stations of a mobile communications network . Each base station transmits an area ID specific to the location registration area, and the portable telephone detects itself having shifted to a different location registration area when an area ID received changes while moving. At this time, a portable telephone sends a location-registration request signal to the network, as a result of which the ID of the portable telephone and the newly located area ID are registered as location registration information in a location registration data base in the network. In this way, the network can always grasp which location registration area a portable telephone is currently located and uses this location registration information for the paging of the portable telephone in receiving a call.

Recently, voiceless use of a mobile communications network such as a mobile packet communications service is becoming popular, and a data communications service which distributes value added information relating to the location of a portable telephone using the aforementioned location registration information and a similar service using location registration information have been proposed accordingly.

However, because the aforementioned location registration area is a wide area which has multiple radio zones gathered (an area with a radius of, for example, 10 Km or greater), there is a problem that a location information service relating to a limited area where a portable telephone is actually located cannot be provided when based on location registration information acquired by the conventional location registration process. For example, in conventional services, it is not possible to distribute location related information limited to a narrow area around a specific station or the like.

The present invention has been made under such circumstances and aims at providing a location registration method, an information distribution method, a mobile communications network and a mobile communications terminal which distribute location related information relating to a much limited area-to-a-mobile-communications terminal.

### Disclosure of Invention

To solve the aforementioned problem, the present invention provides a location registration method for registering a location of a mobile communications terminal served by a mobile communications network comprising the steps of: broadcasting, from each of one or plural specific base stations that constitute a radio zone corresponding to a part of a location registration area consisting of a plurality of radio zones or from a radio transmission device sited in each of the base stations, a radio-zone information notifying signal indicating its own radio zone; detecting in said mobile communications terminal its location in a radio zone of one of said one or said plural specific base stations when having received said radio-zone information notifying signal; transmitting, from said mobile communications terminal that has detected its location in said radio zone of said one base station, a request signal for requesting a location registration process to said one base station; receiving in said one base station said request signal; and performing, in said mobile communications network, a location registration process of generating information on a present location of said mobile communications terminal in said radio zone of said one base station based on said request signal received by said one base station.

The present invention further provides an information distribution method for distributing information to a mobile communications terminal served by a mobile communications network through said mobile communications network comprising the steps of: broadcasting, from each of one or plural specific base stations which constitute a radio zone corresponding to a part of a location registration area consisting of a plurality of radio zones or from a radio transmission device sited in each of the base stations, a radio-zone information notifying signal indicating its own radio zone; detecting, in said mobile communications terminal, its location in a radio zone of one of said one or said plural specific base stations when having received said radio-zone information notifying signal; transmitting, from said mobile communications terminal that has detected said location in said radio zone of said one base station to said one base station, a request signal for requesting a location registration process; receiving in said one base station said request signal; performing, in said mobile communications network, a location registration process of generating information on a present location of said mobile communications terminal in said radio zone of said one base station based on said request signal received by said one base station; and distributing, from an information distribution server, information to said mobile communications terminal located in said radio zone of said one base station, after designating said mobile communications terminal based on the present location information generated by said location registration process.

The present invention further provides an information distribution method for distributing information to a mobile communications terminal served by a mobile communications network through said mobile communications network comprising the steps of: transmitting, from said mobile communications terminal, a call signal for calling another communications terminal; receiving said transmitted call signal in one of one or plural specific base stations which constitute a radio zone corresponding to a part of a location registration area consisting of a plurality of radio zones; performing, in said mobile communications network, a location registration process of generating information on a present location of said mobile communications terminal in said radio zone of said one base station based on said call signal received by said one base station; and distributing, from an information distribution server, said mobile communications terminal located in said radio zone of said one base station, after designating said mobile communications terminal based on the present location information generated by said location registration.

The present invention provides still another information distribution method for distributing information to a mobile communications terminal served by a mobile communications network through said mobile communications network comprising the steps of: transmitting, from said mobile communications terminal, a request signal for information distribution including its own identification information; receiving said request signal in a base station constituting a radio zone in which said mobile communications terminal is located; transferring said request signal, from said base station that has received said request signal to a given information distribution server, after affixing its own identification information to said request signal; and distributing information from said information distribution server to said mobile communication terminal after specifying a location of said mobile communications terminal which has requested said information distribution based on said identification information of said base station affixed to said request signal and said identification information of said mobile communications terminal included in said request signal.

Furthermore, the present invention provides a mobile communications network and a mobile communications terminal which comprise means for executing the location registration methods and information distribution methods according to various modes mentioned above.

For example, the present invention provides a mobile communications network for performing a location registration process of generating present location information of a mobile communications terminal comprising: signal broadcasting means for broadcasting, from each of one or plural specific base stations that constitute a radio zone corresponding to a part of a location registration area consisting of a plurality of radio zones, a radio-zone information notifying signal indicating its own radio zone; signal broadcasting means for broadcasting a radio-zone information notifying signal indicating its own radio zone of one of said one or plural specific base stations through said each of said one or plural specific base stations; signal reception means for receiving through said one base station a request signal for requesting a location registration process transmitted from a mobile communications terminal which has received said radio-zone information notifying signal from said one base station; and location registration means for performing a location registration process of generating information on a present location of said mobile communications terminal in said radio zone of said one base station based on said request signal received by said one base station.

The present invention provides still another mobile communications network for performing a location registration process for generating present location information of a mobile communications terminal comprising: a radio transmission device for transmitting a predetermined radio signal, said radio transmission device being sited in each of radio zones of one or plural specific base stations that constitute a radio zone corresponding to a part of a location registration area consisting of a plurality of radio zones; signal reception means for receiving through said one base station a request signal for requesting a location registration process, said request signal being transmitted from a mobile communications terminal which has received said transmitted radio signal; and location registration means for performing a location registration process of generating information on a present location of said mobile communications terminal in said radio zone of said one base station based on said request signal received by said one base station.

The present invention further provides a mobile communications terminal served by a mobile communications network comprising: a memory for storing identification information of said mobile communications terminal itself; signal reception means for receiving a radio-zone information notifying signal indicating a radio zone of one of said one or plural specific base stations, said radio-zone information notifying signal being transmitted from each of one or plural specific base stations that constitute a radio zone corresponding to a part of a location registration area consisting of a plurality of radio zones or from a given radio signal transmission device sited in each radio zone; and signal transmission means for transmitting, to said one base station, a request signal for requesting a location registration process of performing location registration by generating a present location information in said radio zone in response to the reception of said radio-zone information notifying signal, after including said stored identification information in said request signal.

According to the present invention, the ID of a base station covering a radio zone including a specific area where a mobile communications terminal is located is obtained. Thus, it is possible to know the detailed location of the mobile communications terminal, so that the user of the mobile communications terminal can be provided with specific information according to the location of the mobile communications terminal.

### Brief Description of the Drawings

Fig. 1 is a block diagram showing a general configuration of a mobile communications system according to a first embodiment of the present invention.
Fig. 2 is a diagram illustrating a relationship between a wide-area location registration area and a narrow-area location registration area according to the embodiment.
Fig. 3 is a format diagram of a wide-area location registration data base according to the embodiment.
Fig. 4 is a format diagram of a narrow-area location registration data base according to the embodiment.
Fig. 5 is a block diagram showing a configuration of a mobile station according to the embodiment.
Fig. 6 is a block diagram showing a configuration of a gateway server according to the embodiment.
Fig. 7 is a format diagram of an area-code table provided in the gateway server according to the embodiment.
Fig. 8 is a data format diagram of a location-related information data base according to the embodiment.
Fig. 9 is a sequence chart illustrating a registration operation of narrow-area location registration according to the embodiment.
Fig. 10 is a sequence chart illustrating a deleting operation of narrow-area location registration according to the embodiment.
Fig. 11 is a sequence chart illustrating an operation of distributing information to a mobile station according to the embodiment.
Fig. 12 is a block diagram showing a general configuration of a mobile communications system according to a second embodiment of the present invention.
Fig. 13 is a block diagram showing a configuration of a gateway server according to the embodiment.
Fig. 14 is a format diagram of an area-code table provided in the gateway server according to the embodiment.
Fig. 15 is a sequence chart illustrating an operation of distributing information to a mobile station according to the embodiment.

### Best Mode of Carrying Out the Invention

The present invention may be carried out by the following two embodiments depending on the modes of information distribution from an information distribution server to a mobile communications terminal.

First, the first embodiment of the present invention may be applied to a distribution mode in which an information distribution server independently distributes information to a mobile communications terminal without waiting for a request from the mobile communications terminal. This distribution mode is hereinafter called "push type distribution".

This push type distribution is used in such a case where, for example, an information distribution server wants to inform the user of every mobile communications terminal located in front of an A station of information about an event which takes place in front of the A station. In the first embodiment, with regard to a specific area, local location registration is performed in a narrower area than the conventional location registration area, and the information distribution server provides mobile communications terminals with information based on location information of the mobile communications terminals that is acquired by the registration.

A second embodiment of the present invention may be applied to a distribution mode in which, in response to a request to an information distribution server, the request being made by a mobile communications terminal, information is distributed to this terminal. This distribution mode is hereinafter called "pull type distribution".

This pull type distribution is used in such a case where, for example, the user of a mobile communications terminal who wants to go to a nearest bank inquires of an information distribution server about the positions of banks located around a current position of the terminal. In the second embodiment, the location of a mobile communications terminal is grasped based on ID (Identification) or the like of a base station (hereinafter called a base station ID) in a mobile communications network, which is affixed to an information request signal to be transmitted to an information distribution server from the mobile communications terminal, and the terminal is provided with information according to the location.

Each of the first and second embodiments will be described with reference to the drawings. Note however that the present invention is not limited to the embodiments but can be modified in various ways within the scope of the technical concept.

### A: First Embodiment

### A-1: Configuration

First, the configuration of the first embodiment will be discussed.

### A-1-1: General Configuration of Mobile Communications System

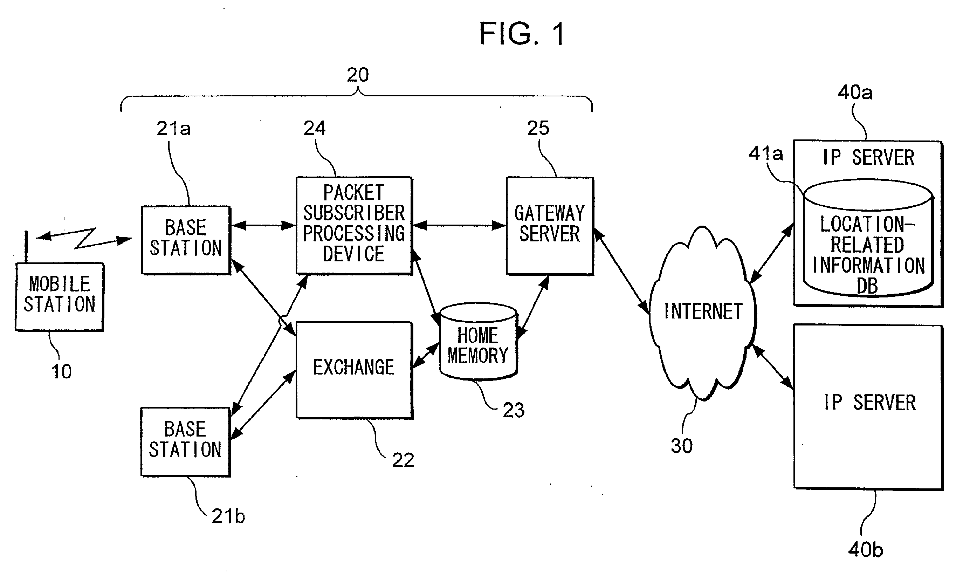

Fig. 1 is a block diagram showing the general configuration of a mobile communications system according to a first embodiment of the present invention. In the diagram, the mobile communications system comprises a mobile station 10, a mobile packet communications network 20 which is a mobile communications network that serves the mobile station 10, an Internet 30, IP (Information Provider) servers 40a, 40b, ... and so forth. The IP servers 40a, 40b, ... are server systems operated by information providers and connected to a gateway server 25 via the Internet 30.

The mobile station 10 is a mobile communications terminal, such as a portable telephone, and executes data communications via the mobile packet communications network 20 in addition to voice communications via an unillustrated mobile telephone network.

Next, the mobile packet communications network 20 is a communications network for providing the mobile station 10 with a packet communications service, and comprises base stations 21a, 21b, ..., an exchange 22, a home memory 23, a packet subscriber processing device 24, the gateway server 25, communications lines interconnecting them, etc.

Muitiple base stations 21a, 21b, ... are sited at predetermined distances within a communications service area, and the base stations perform radio communications with the mobile station 10 present in each radio zone. The base stations 21a, 21b, ... store base station IDs assigned thereto. The base station ID is used for a distribution service for location related information as will be discussed later.

The exchange 22 serves a plurality of base stations 21a, 21b, ... and performs a switching process of the communication line of the mobile stations 10 present in the radio zones of the base stations.

The home memory 23 is a storage device which performs a location registration process and a location deletion process of the mobile station 10 as location registration means and location registration deleting means according to the embodiment; and in the home memory 23, in addition to this location registration information, various kinds of information such as subscriber information and billing information are stored as a data base.

The packet subscriber processing device 24 is a computer system included in the exchange 22 in terms of the device configuration, and stores unique identification information of the packet subscriber processing device (hereinafter called PID (packet subscriber processing device identifier)). The packet subscriber processing device 24 executes a process of relaying a packet exchange between the mobile station 10 and the gateway server 25.

The gateway server 25 is a computer system provided in a mobile packet gateway relaying/switching center (not shown) for connecting the mobile packet communications network 20 to other networks such as the Internet 30, and converts between different communication protocols among a plurality of networks to relay data exchange among the networks. Specifically, the gateway server 25 converts between a unique transmission protocol of the mobile packet communications network 20 and TCP/IP (Transmission Control Protocol/Internet Protocol)and relays packet exchange among the mobile station 10 and the IP servers 40a, 40b, ..., the TCP/IP being the communication protocol of the Internet 30.

Next, each of the IP servers 40a, 40b, ... is an information distribution server providing the mobile station 10 with various kinds of information and stores information to be provided as data in a HTML (Hyper Text Markup Language) format (hereinafter called HTML data).

Of those IP servers 40a, 40b, ..., the IP server 40a is a server providing the mobile station 10 with information relating to the location of the mobile station 10 (hereinafter called location related information). The IP server 40a has a location-related information data base 41a for storing various types of location related information.

### A-1-2: Location Registration

In the present embodiment, local location registration aiming at providing location related information relating to a limited area (hereinafter called narrow-area location registration) is performed in addition to a conventional location registration (hereinafter called wide-area location registration) for paging the mobile station 10 at the time of incoming calls.

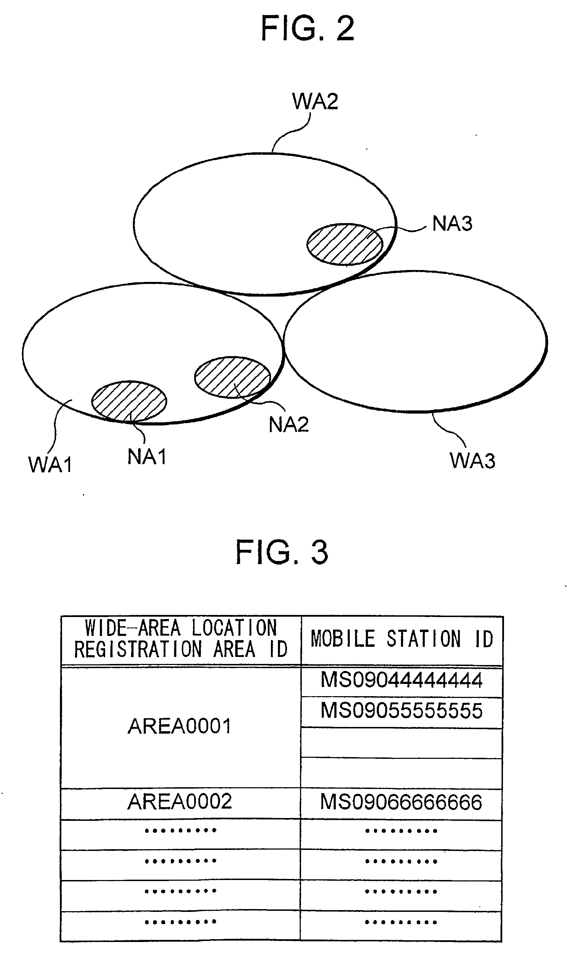

Fig. 2 is a conceptual diagram illustrating the relationship between a wide-area location registration area for wide-area location registration and a narrow-area location registration area for narrow-area location registration. Wide-area location registration areas WA1 to WA3 are areas defined by gathering radio zones covered by multiple base stations 21a, 21b, ..., and a location registration process is carried out on an area-to-area basis. Those base stations 21a, 21b, ... are constantly broadcasting, to mobile communications terminals present in their local radio zones, area IDs of wide-area location registration areas to which the base station belong. (Because this location registration process is a well-known technique, its description will be omitted.) Information on wide-area location registration is registered in the home memory 23.

Meanwhile, a narrow-area location registration area is an area which is defined in a unit of radio zones covered by a single base station 21. As shown in Fig. 2, this narrow-area location registration area is not laid for all the radio zones of a plurality of base stations 21 that form the wide-area location registration areas WA1 to WA3 but is set only for radio zones NA1, NA2 and NA3 of some base stations 21.

Thus, radio zones to which narrow-area location registration is applied are exceptionally set for local areas (e.g., specific areas, such as the front of a station and a busy shopping area), and the number of radio zones for narrow-area location registration is considerably smaller than the total number of the radio zones formed by the base stations. Therefore, the execution of such narrow-area location registration in addition to wide-area location registration hardly cause a problem such as an increase in traffic.

Each of the base stations 21 of the radio zones NA1, NA2 and NA3 set as the targets for narrow-area location registration is constantly broadcasting, to mobile communications terminals present in its own radio zone, an area ID of the wide-area location registration area to which it belongs and its own base station ID. When the mobile station 10 is located in any of the narrow-area location registration areas NA1 to NA3, it detects a present location area by receiving the base station ID transmitted from the associated base station 21 and transmits to the base station 21 a request signal for requesting narrow-area location registration. The request signal includes a mobile station ID (identification information of the mobile station 10) stored in the mobile station 10 and the base station ID received by the mobile station 10, and the request signal is transferred to the home memory 23 from the base station 21. Information relating to narrow-area location registration is registered in the home memory 23 based on the request signal.

The narrow-area location registration is carried out when the area ID received by the base station ID received by the mobile station 10 changes to another, whereas the wide-area location registration is carried out when the area ID received by the mobile station 10 changes to another. Therefore, when both the area ID and base station ID received by the mobile station 10 change as a result of the movement of the mobile station 10, a request signal requesting both wide-area location registration and narrow-area location registration is transmitted to the base station 21 from the mobile station 10, and the location of the mobile station 10 is registered in the home memory 23. This is, for example, a case where the mobile station 10 located outside the wide-area location registration area WA1 has moved into the narrow-area location registration area NA1 provided in the wide-area location registration area WA1. In a case where the mobile station 10 already located in the wide-area location registration area WA1 has moved into the narrow-area location registration area NA1, it is the movement within the same wide-area location registration area, so that the area ID received by the mobile station 10 does not change. In this case, therefore, a wide-area location registration process is not executed but only a narrow-area location registration process is carried out.

### A-1-3: Configuration of Home Memory 23

Next, the configuration of the home memory 23 will be discussed. The home memory 23 has a wide-area location registration data base for storing the wide-area location registration information and a narrow-area location registration data base for storing the narrow-area location registration information.

Fig. 3 is a format diagram showing the registered contents of the wide-area location registration data base provided in the home memory 23. As illustrated in the diagram, the -wide-area location registration data base stores a mobile station ID indicating a mobile station 10 located in each area in association with each of wide-area location registration area IDs indicating the respective wide-area location registration areas WA1, WA2, WA3,... . For example, it means that two mobile stations 10 indicated by mobile station IDs "MS09044444444" and "MS09055555555" are present in the wide-area location registration area that is indicated by an area ID "AREA0001".

Every time the mobile station 10 moves to a new wide-area location registration area, the wide-area location registration process is executed to renew the details registered in the wide-area location registration data base.

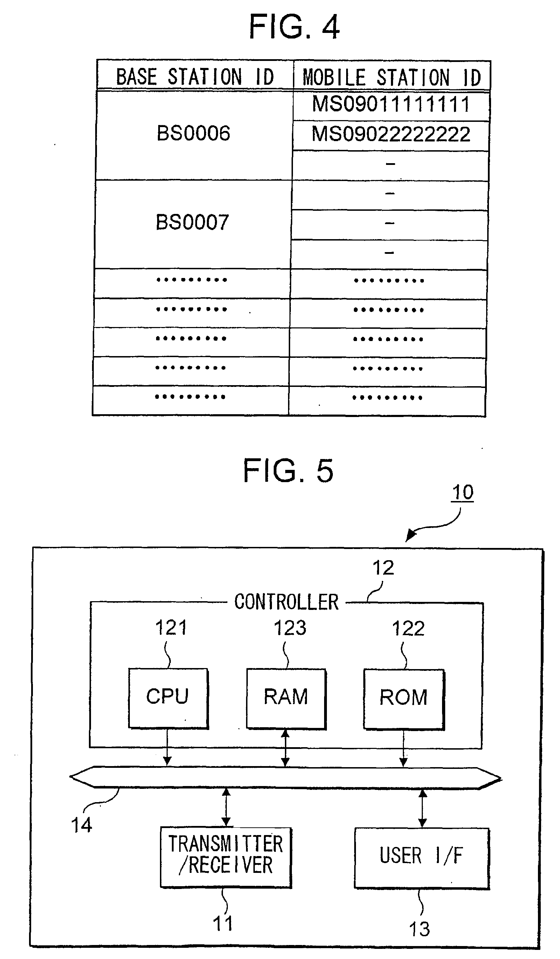

Fig. 4 is a format diagram showing the details registered in the narrow-area location registration data base. As illustrated in the diagram, the narrow-area location registration data base stores a mobile station ID indicating a mobile station 10 located in each radio zone in association with each base station ID indicating the base station 21 that serves the radio zone for narrow-area location registration. For example, it means that two mobile stations 10 identified by mobile station IDs "MS09011111111" and "MS09022222222" are present in the radio zone of the base station 21 identified by a base station ID "BS006". Further, it means that there is no mobile station 10 located in the radio zone of the base station 21 identified by a base station ID "BS0007".

When the mobile station 10 moves into a radio zone for narrow-area location registration, the narrow-area location registration process is executed to renew the details registered in the narrow-area location registration data base. The details of the narrow-area location registration process will be given later.

### A-1-4: Configuration of Mobile Station 10

Next, the configuration of the mobile station 10 will be discussed by referring to Fig. 5.

Fig. 5 is a block diagram showing the configuration of the mobile station according to the present embodiment. In the diagram, the mobile station 10 comprises a transmitter/receiver 11, a controller 12, a user interface unit 13 and a bus 14 interconnecting them, etc.

The transmitter/receiver 11 functions as signal transmission means and signal reception means and performs radio communications with the base stations 21a, 21b, ... of the mobile packet communications network 20.

The user interface unit 13 has a liquid crystal display which displays various kinds of information, a key pad for a user to perform various kinds of input operations, a microphone and a speaker for the user to talk, etc.

The controller 12 controls the entire mobile station 10 and comprises a CPU (Central Processing Unit) 121, ROM (Read Only Memory) 122, RAM (Random Access Memory) 123, etc. The CPU 121 reads a control program stored in the ROM 122 and executes various kinds of control processes. At that time, the RAM 123 is used as a work area for the CPU 121.

Stored in the ROM 122 are a browser which interprets received HTML data and provides an interactive function, a control program for executing the narrow-area location registration process, the location registration process being a precondition for providing a user with location related information, the mobile station ID of the mobile station 10 and so forth in addition to a control program for providing the user with a voice communications service and packet communications service.

### A-1-5: Configuration of Gateway Server 25

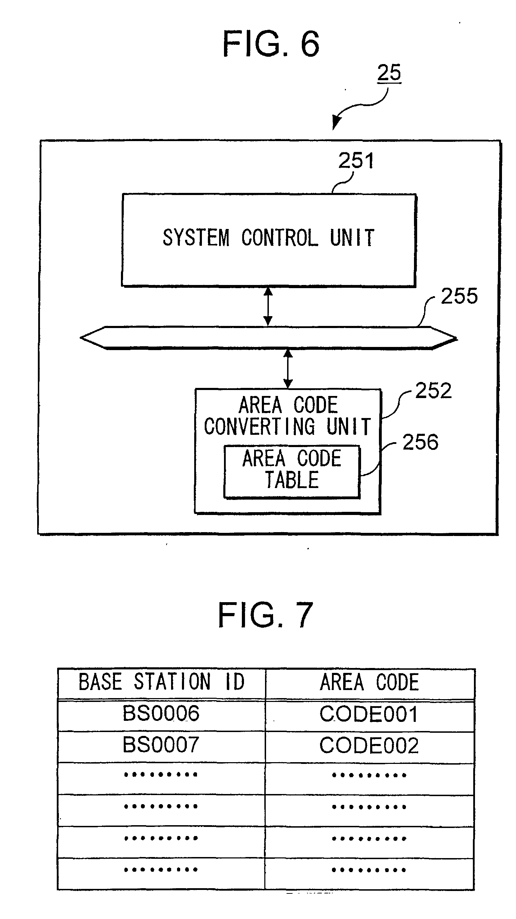

Next, the configuration of the gateway server 25 will be discussed by referring to Fig. 6.

Fig. 6 is a block diagramshowing the configuration of the gateway server 25. In the diagram, the gateway server 25 comprises a system control unit 251, an area code converting unit 252 and a bus 255 interconnecting them.

The system control unit 251 controls the entire gateway server 25 and functions as an interface with networks, and, for example, executes a protocol conversion between the mobile packet communications network 20 and another network such as the Internet 30.

By referring to an area code table 256, the area code converting unit 252 converts between a "base station ID" to be identified as information indicating the location of the mobile station 10 in a mobile communications network and an "area code" to be identified by the IP servers 40a, 40b, ... provided outside the network as information indicating the location of the mobile station 10.

Fig. 7 is a format diagram of the area-code table 256. As shown in the diagram, a "base station ID" of the base station 21 that performs narrow-area location registration and an "area code" indicating an area where the base station 21 is sited are stored in the area code table 256, the base station ID and the area code being correlated with each other. For example, it means that the radio zone of the base station 21 identified by the base station ID "BS006" is located in an area identified by an area code "CODE001".

### A-1-5: Configuration of Location-related Information Data Base 41a

Next, the configuration of the location-related information data base 41a provided in the IP server 40a will be discussed.

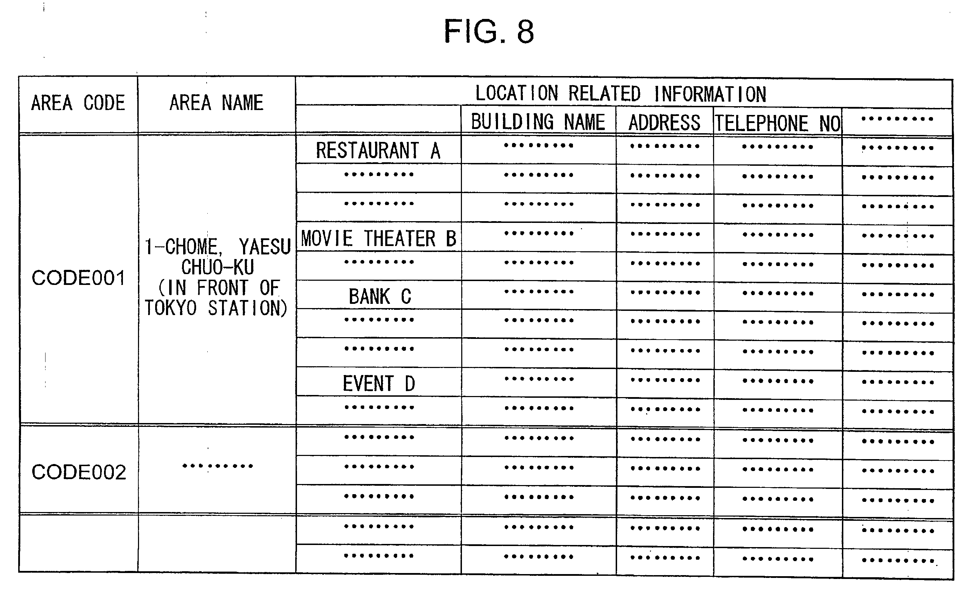

Fig. 8 is a format diagram of the location-related information data base 41a. As shown in the diagram, the "area code" of each area, the "area name" of the area identified by the area code and various types of "location related information" relating to that area are stored in the location-related information data base 41a. For example, the area code "CODE001" indicates "1-chome, Yaesu, Chuo-ku, Tokyo (in front of Tokyo station)" and further, location related information such as "restaurant", "movie theater", "bank", "building name (or a site at which an event is held)" of an "event" or the like in that area, and "address" and "telephone number" thereof are stored.

### A-2: Operation

In the first embodiment with the above-described configuration, the location of the mobile station 10 is obtained by performing narrow-area location registration based on a narrow-area location registration area, and the mobile station 10 is provided with location related information based on the grasped location. Therefore, the following description will be given separately on 1: an operation associated with narrow-area location registration and 2: an operation for distributing location related information.

### A-2-1: Operation Associated with Narrow-area Location Registration

The operation associated with narrow-area location registration includes (1) an operation of, when the mobile station 10 moves into a narrow-area location registration area, correspondingly registering narrow-area location registration information, and (2) an operation of, when the mobile station 10 moves out of the narrow-area location registration area, correspondingly deleting the narrow-area location registration information already registered. The individual operations will be discussed below.

### (1) Registration Operation of Narrow-area Location Registration

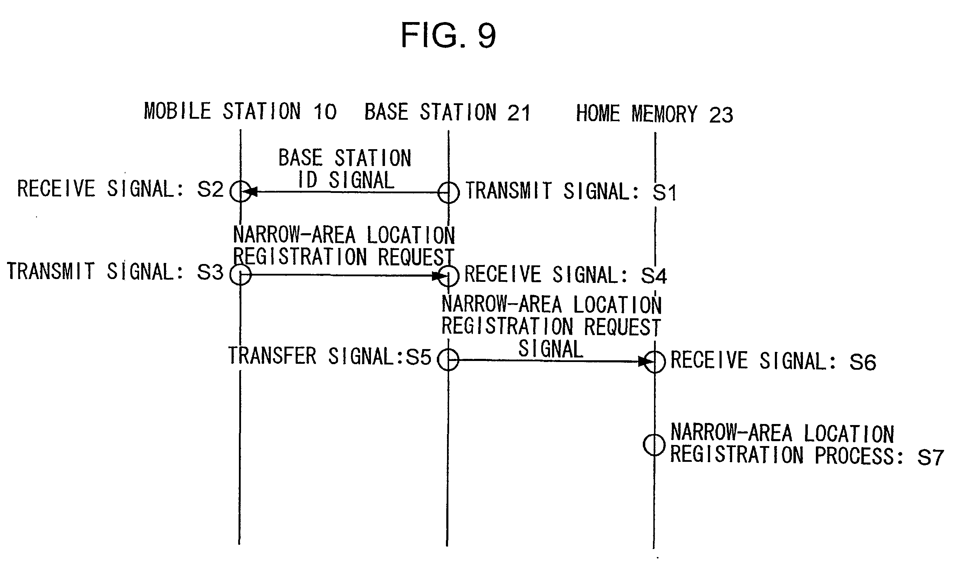

Next, a registration operation for narrow-area location registration information will be described by referring to a sequence chart shown in Fig. 9.

The narrow-area location registration process illustrated in the diagram is executed only for the mobile station 10 that has moved inside the narrow-area location registration areas NA1 to NA3. It is assumed here that the narrow-area location registration process is performed for the mobile station 10 present in the narrow-area location registration area NA1.

The base station 21 sited in the narrow-area location registration area NA1 is constantly broadcasting within its own radio zone (i.e., the narrow-area location registration area NA1) a base station ID signal indicating its own base station ID in addition to an area ID signal indicating the area ID of the wide-area location registration area WA1 to which the station 21 belongs (step S1)

The mobile station 10 is preset in such a way as to transmit a narrow-area location registration request signal requesting narrow-area location registration upon reception of the base station ID signal. Specifically, when the mobile station 10 is located in the narrow-area location registration area NA1, the mobile station 10 receives the base station ID signal (step S2) and transmits the narrow-area location registration request signal to the base station 21 accordingly (step S3). The narrow-area location registration request signal includes the base station ID indicated by the base station ID signal received by the mobile station 10 and the mobile station ID of the mobile station 10.

The base station 21 receives the narrow-area location registration request signal transmitted from the mobile station 10 (step S4). Next, the base station 21 transfers the received narrow-area location registration request signal to the home memory 23 (step S5).

The home memory 23 receives the narrow-area location registration request signal transferred from the base station 21 (step S6). Then, the home memory 23 detects the base station ID and mobile station ID included in the received narrow-area location registration request signal and registers them in the narrow-area location registration data base as narrow-area location registration information (step S7).

### (2) Deletion Operation of Narrow-area Location Registration Information

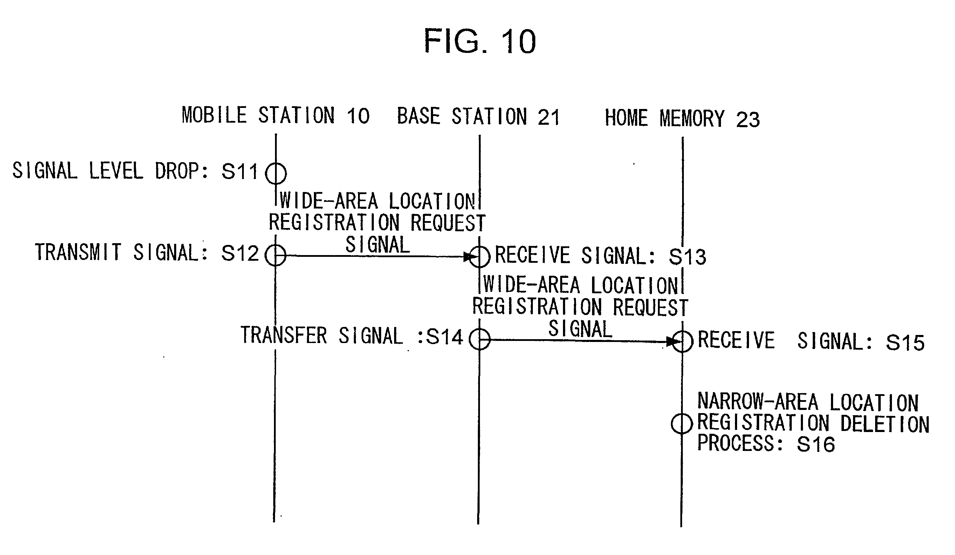

Next, a deletion operation for narrow-area location registration information will be described by referring to a sequence chart shown in Fig. 10. It is assumed here that the mobile station 10 which was present in the narrow-area location registration area NA1 has moved out of the narrow-area location registration area NA1.

The mobile station 10 is preset in such a way as to transmit a narrow-area location registration deletion request signal requesting the deletion of narrow-area location registration when the reception level of the base station ID signal becomes equal to or lower than a threshold value. When the mobile station 10 moves out of the narrow-area location registration area NA1, the reception level of the base station ID signal received by the mobile station 10 in the area NA1 becomes equal to or lower than the threshold value (step S11), and the mobile station 10 transmits the narrow-area location registration deletion request signal to the base station 21 accordingly (step S12). The narrow-area location registration deletion request signal includes the mobile station ID of the mobile station 10 and the base station ID whose received signal level has become lower.

The base station 21 receives the narrow-area location registration deletion request signal transmitted from the mobile station 10 (step S13). Next, the base station 21 transfers the received narrow-area location registration deletion request signal to the home memory 23 (step S14).

The home memory 23 receives the narrow-area location registration deletion request signal transferred from the base station 21 (step S15). Then, the home memory 23 detects the base station ID and mobile station ID included in the received narrow-area location registration deletion request signal and deletes narrow-area location registration information comprising the detected base station ID and mobile station ID from the narrow-area location registration data base (step S16).

### A-2-2: Operation for Information Distribution

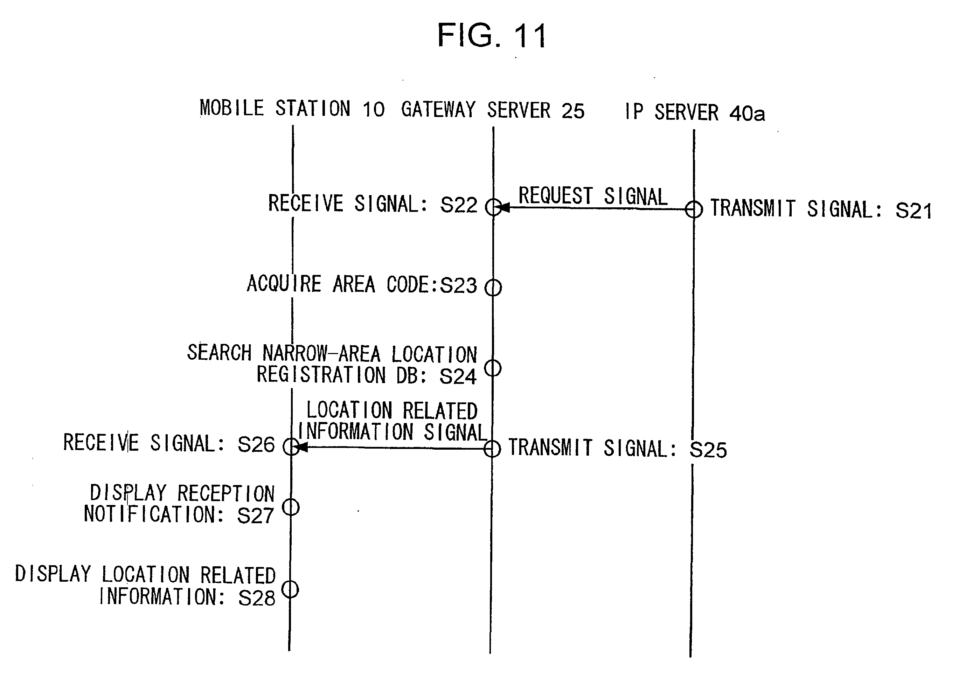

An operation of providing the mobile station 10 with location related information will be described by referring to a sequence chart shown in Fig. 11. In the diagram, it is assumed that, for example, the IP server 40a provides the user(s) of a mobile station(s) 10 located in front of Tokyo station with location related information relating to an event D which is held near Tokyo station.

First, the IP server 40a sends the gateway server 25 a request signal requesting to provide every mobile station located in front of Tokyo station with location related information (step S21). This request signal includes an area code "CODE001" indicating the front of Tokyo station and location related information relating to the event D acquired from the location-related information data base 41a shown in Fig. 8.

When receiving the request signal transmitted from the IP server 40a (step S22), the gateway server 25 first detects the area code "CODE001" in the request signal. Then, the gateway server 25 searches the area code table 256 shown in Fig. 7 using the detected "CODE001" as a search key and acquires the associated base station ID "BS006" (step S23).

Next, the gateway server 25 accesses the home memory 23 and searches the narrow-area location registration data base shown in Fig. 4 using the base station ID "BS006" acquired in step S23 as a search key. As a result of the search, the gateway server 25 acquires the mobile station IDs "MS09011111111" and "MS09022222222" of mobile stations that are present in the radio zone of the base station 21 identified by the base station ID "BS006" (step S24).

Then, the gateway server 25 transmits an information signal indicating the location related information relating to the event D via the base station 21 identified by the base station ID "BS006" (step S25). The mobile stations to which the information signal is to be sent are designated by the mobile station IDs "MS09011111111" and "MS09022222222" acquired in step S24.

When each of the mobile stations identified by the mobile station IDs "MS09011111111" and "MS09022222222" receives the information signal (step S26), it displays on its liquid crystal display the fact that indicates the reception of the location related information to inform the user thereof(step S27). Then, the received location related information is displayed on the liquid crystal display in accordance with a predetermined key operation by the user who has seen the display, thereby providing the user with the location related information (step S28).

According to the above-described first embodiment, location registration of the mobile station 10 is performed in a specific local area within a conventional location registration area, so that a more detailed location of the mobile station 10 can be obtained, thereby enabling the provision of more detailed location related information to the user of the mobile station 10 than those in the conventional method.

### B: Second Embodiment

A description will now be given of the aforementioned pull type distribution mode as the second embodiment of the present invention.

### B-1: Configuration

### B-1-1: General Configuration of Mobile Communications System

First, the configuration of a mobile communications system according to the second embodiment will be discussed.

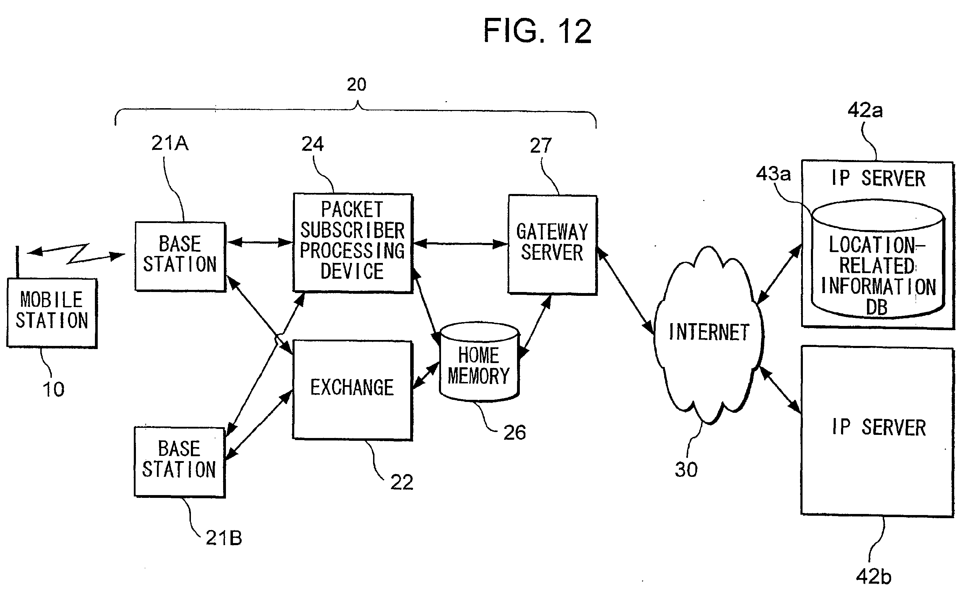

Fig. 12 is a block diagram showing the general configuration of the mobile communications system according to the second embodiment. In the figure, the same reference numerals as used in Fig. 1 are given to those components which are the same as those of the first embodiment, so their description will be omitted.

The second embodiment shown in Fig. 12 differs from the first embodiment in its configuration of base stations 21A, 21B, ..., a home memory 26, a gateway server 27 and an IP server 42a.

As mentioned above, the second embodiment is applied to a distribution mode in which in response to a request to an information distribution server made by a mobile communications terminal, information is distributed to the terminal, i.e., the "pull type distribution". Specifically, according to the second embodiment, unlike the first embodiment, the location of the mobile station 10 is not grasped by using narrow-area location registration information thereof; when a request signal requesting location registration (wide-area location registration in the first embodiment) is transmitted from the mobile station 10, the base station ID of the base station that has received the request signal is automatically affixed and sent to the home memory 26. The home memory 26 grasps the location of the mobile station 10 by using this base station ID. Therefore, the base stations 21A, 21B, ... execute only a location registration process based on a conventional location registration area (i.e., a wide-area location registration area explained in the first embodiment). While the home memory 26 has a data base for storing conventional location registration information, it does not have a data base for storing narrow-area location registration information.

### B-1-2: Configuration of Gateway Server 27

Next, the configuration of the gateway server 27 will be discussed.

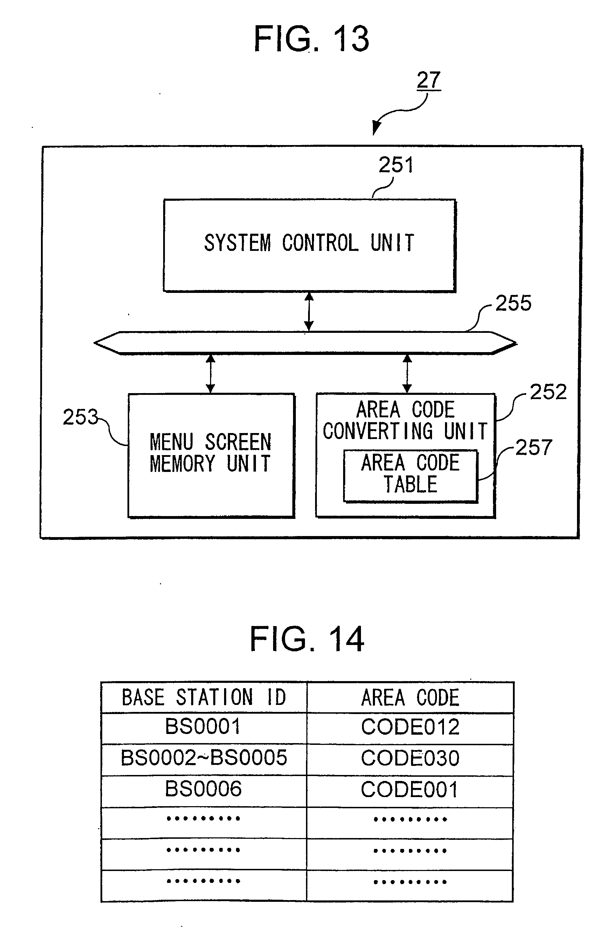

Fig. 13 is a diagram showing a configuration of the gateway server 27. In the diagram, the gateway server 27 comprises a menu screen memory unit 253 in addition to the system controller 251 and area code converting unit 252.

The menu screen memory unit 253 stores HTML data to be displayed as an initial menu screen on the mobile station 10. The initial menu screen is a screen which displays initial menu items of various services provided to the user of the mobile station 10. The menu screen memory unit 253 sends the HTML data of the initial menu screen in response to a request from the mobile station 10.

The initial menu items include, for example, an "electronic mail service" and "news flash service" or the like in addition to a "location information distribution service" which will be explained in this embodiment. Embedded in each of those menu items is a URL (Uniform Resource Locator) which designates the information resource of IP server 42a, 42b, ... which executes a corresponding service. That is, when the user of the mobile station 10 selects a desired item from the displayed initial menu items, it is possible to automatically gain access to the address of the corresponding information resource, so that the user can acquire information.

The area code converting unit 252 has an area code table 257 for converting a "base station ID" to an "area code".

Fig. 14 is a format diagram of data to be stored in the area-code table 257. As shown in the diagram, the "base station IDs" of the base stations 21A, 21B, ... and "area codes" indicating areas where the base stations 21A, 21B, ... are located are stored in the area code table 257, being correlated with each other. Unlike the area code table 256 of the first embodiment, the area code table 257 stores the "base station IDs" of all the base stations 21A, 21B, ... and their associated "area codes". For example, it means that the base station 21 identified by a base station ID "BS0001" is located in an area identified by an area code "CODE012" and that the base stations 21 identified by base station IDs "BS0001 to BS0005" are located in an area identified by an area code "CODE030".

### B-1-3: Configuration of IP server 42a

The IP server 42a which provides location related information stores service menu screen data which provides a user with more detailed service menus. In response to a request from the mobile station 10, the IP server 42a sends the service menu screen data to the mobile station 10 via the gateway server 27. The service menus includes, for example, a "restaurant information distribution service", "bank information distribution service", "movie theater information distribution service", etc. which provide a user with location information or the like of a nearest restaurant, bank, movie theater, etc. The URL of an information resource in the IP server 42a which provides each service menu is embedded in the service menu. When the user selects a desired service menu on the service menu screen, the mobile station 10 then accesses the information resource that is designated by the URL embedded in the service menu.

### B-1-4: Acquisition of the Location of Mobile Station 10

A description will now be given of how to acquire the location of the mobile station 10 by referring to Fig. 12.

Each of the base stations 21A, 21B, ... and the packet subscriber processing device 24 shown in Fig. 12 adds its own ID to a service request signal to be transmitted to the IP servers 42a, 42b, ... from the mobile station 10 when the service request signal is being relayed. That is, when the service request signal is received by the base station 21A, after the request signal having been transmitted from the mobile station 10, the base station ID of the base station 21A is added first, and when it is received by the packet subscriber processing device 24, the PID of the packet subscriber processing device 24 is subsequently added.

As a result, by the time the service request signal transmitted from the mobile station 10 and addressed to the IP server 42a passes through the mobile packet communications network 20 and is received by the gateway server 27, the service request signal should include the base station ID and PID added during the process of being relayed in the network in addition to the mobile station ID of the mobile station 10. Therefore, by referring to the mobile station ID and the base station ID in the service request signal transmitted from the mobile station 10, the gateway server 27 can learn which mobile station 10 is located in the radio zone of which base station 21A.

### B-2: Operation

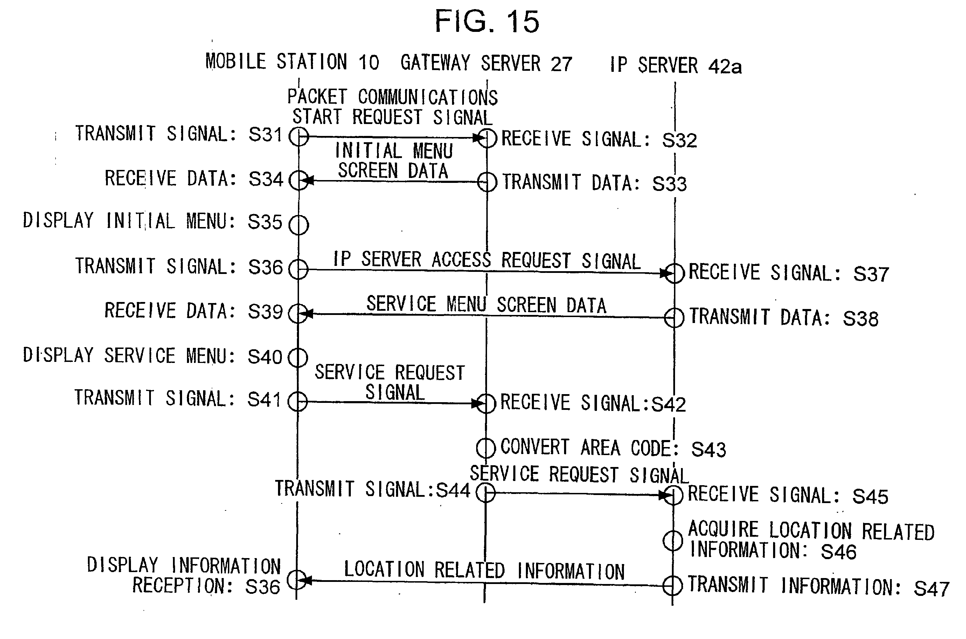

Next, the operation of the second embodiment with the above-described configuration will be discussed by referring to a sequence chart of Fig. 15.

First, the mobile station 10 calls the gateway server 27 in accordance with a predetermined key operation by a user, and transmits a packet communications start request signal requesting the initiation of a packet communications service (step S31).

When receiving the packet communications start request signal from the mobile station 10 (step S32), the gateway server 27 goes into a packet exchange mode accordingly and transmits initial menu screen data stored in the server 27 itself to the mobile station 10 (step S33).

The mobile station 10 receives initial menu screen data (step S34), interprets the data to display an initial menu screen on the liquid crystal display and waits for the user to make a menu selection input (step S35).

Next, when the user selects a desired service menu (it is assumed here that the user has selected the "location information distribution service" provided by the IP server 42a), the mobile station 10 transmits an IP server access request signal requesting access to the IP server 42a. The IP server access request signal includes the URL embedded in the selected menu item of the initial menu and the mobile station ID of the mobile station 10 (step S36).

Meanwhile, the IP server 42a receives through the gateway server 27 the IP server access request signal sent from the mobile station 10 (step S37), and transmits service menu screen data stored in the IP server 42a itself to the mobile station 10. A destination mobile station 10 is designated by the mobile station ID included in the IP server access request signal (step S38).

The mobile station 10 receives the service menu screen data via the gateway server 27 (step S39). Then, the mobile station 10 interprets the received data to display a service menu screen on the liquid crystal display and waits for the user to make a menu selection input (step S40).

Next, when the user selects a desired service menu item, the mobile station 10 transmits a service request signal requesting the provision of the selected service accordingly. The service request signal includes the URL embedded in the selected service menu item and the mobile station ID of the mobile station 10 (step S41). It is assumed here that the user is located in front of Tokyo station and has selected the "bank information distribution service" to acquire information about nearby banks.

Meanwhile, the gateway server 27 receives the service request signal sent from the mobile station 10 (step S42). Next, the gateway server 27 searches the area code table 257 shown in Fig. 14 using the base station ID ("BS0006") affixed to the service request signal as a search key and acquires a corresponding area code "CODE001". Then, the gateway server 27 converts the base station ID "BS0006" affixed to the service request signal into the acquired area code "CODE001" (step S43).

Next, the gateway server 27 sends the service request signal to the information resource of the IP server 42a designated by the URL in the service request signal (step S44).

Meanwhile, the IP server 42a receives the service request signal sent from the gateway server 27 (step S45). Next, by referring to the area code "CODE001" included in the service request signal, the IP server 42a acquires location related information of an area corresponding to the area code (i.e., information about banks in front of Tokyo station) from the location-related information data base 41a shown in Fig. 8 (step S46).

Next, the IP server 42a transmits the acquired location related information to the gateway server 27 while designating the mobile station 10 based on the mobile station ID included in the service request signal (step S47).

The mobile station 10 receives via the gateway server 27 the location related information for display (step S48). Thus, the user achieves the desired purpose.

The second embodiment described above has the following advantage.

The service request signal to be transmitted to the IP server 42a from the mobile station 10 includes the base station ID of the base station 21 which covers the radio zone where the mobile station 10 is present, and therefore the specific location of the mobile station can be acquired by using the base station ID. As a result, the user of the mobile station 10 can be provided with location related information relating to a more limited area.

### C: Modifications

As already mentioned, the present invention is not limited to the embodiments but can be modified in various forms such as those given below.

### C-1: Mode of Area for Narrow-area Location

While a narrow-area location registration area is an area which has radio zones covered by a single base station as a unit in the embodiments, it is not so limited but an area having radio zones covered by plural (e.g., two) base stations may be a single narrow-area location registration area. In this case, the two base stations broadcast the ID assigned to the narrow-area location registration area within their radio zones.

### C-2: Mode of Registration Operation for Narrow-area Location Registration

According to the above-described first embodiment, the mobile station 10 detects its presence in a narrow-area location registration area by receiving the base station ID sent from the base station 21. However, the embodiment should not necessarily be limited to such a mode but may take modes discussed below.
(1) For example, the mobile station 10 may detect that it is present in a narrow-area location registration area by receiving a radio signal sent from a given radio device. Specifically, a radio-signal transmission device which transmits a radio signal, such as infrared rays, is sited in a narrow-area location registration area. The radio signal transmitted from the radio-signal device is a signal for instructing the transmission of a narrow-area location registration request signal to the mobile station 10.
   The mobile station 10 has a function of receiving the radio signal transmitted from the signal transmission device, and the mobile station 10 is designed to transmit a narrow-area location registration request signal including its own mobile station ID to the base station 21 upon reception of the radio signal.
   When receiving a call signal from the mobile station 10, the base station 21 detects the mobile station ID in the call signal and sends the detected mobile station ID and its own base station ID to the home memory 23. The home memory 23 stores the received mobile station ID and base station ID in a narrow-area location registration data base 232.
(2) Further, narrow-area location registration may be carried out by using a call signal transmitted from the mobile station 10. Specifically, in case where a user uses the mobile station 10 to make a phone call to another mobile station or a fixed telephone, the mobile station ID and a narrow-area location registration request are included in the call signal transmitted from the mobile station 10. When the base station 21 that performs narrow-area location registration receives such a call signal, it detects the mobile station ID in the received call signal and transmits the detected mobile station ID and its own base station ID to the home memory 23. The home memory 23 stores the received mobile station ID and base station ID into the narrow-area location registration data base 232.

### C-3: Mode of Deletion Operation for Narrow-area Location Registration

According to the above-described first embodiment, the operation of deleting narrow-area location registration is executed when the reception level of the base station ID drops, but it is not limited to such a mode.

For example, narrow-area location registration information associated with the mobile station 10 in the narrow-area location registration data base may be deleted when the mobile station 10 completes the reception of location related information transmitted from the IP server 40a. Specifically, when the mobile station 10 completes the reception of location related information, it sends a reception completion signal to the base station 21. The reception completion signal includes the mobile station ID of the mobile station 10. When the base station 21 receives the reception completion signal, it transfers the signal to the home memory 23. The home memory 23 deletes narrow-area location registration information in the narrow-area location registration data base by referring to the mobile station ID in the received signal.

### C-4: Mode of Mobile Station 10

While the first and second embodiments use a mobile communications terminal such as a portable telephone, it is not so limited but a mobile communications terminal such as PDA (Personal Digital Assistants) or PHS (Personal Handyphone System) exclusively for data communications may be used if they have a function of radio-communicating data with the base station 21 in the mobile packet communications network 20.

### C-5: Mode of IP Servers 40a, 40b, ...

While the IP servers 40a, 40b, ... are connected to the gateway server 25 via the Internet 30 in the first and second embodiments, it should not necessarily be limited to such a connection. For example, the IP servers 40a, 40b, ... may be connected to the gateway server 25 via special lines or may be provided inside the mobile packet communications network 20.

### C-6: Description Language for Data

While data supplied to the mobile station 10 from the gateway server 25 and the IP servers 40a, 40b, ... is of the HTML format in the first and second embodiments, it is not so limited but other description languages, such as XML (Extensible Markup Language), may be used.

## Claims

1. A location registration method for registering a location of a mobile communications terminal served by a mobile communications network comprising the steps of:
broadcasting, from each of one or plural specific base stations that constitute a radio zone corresponding to a part of a location registration area, a radio-zone information notifying signal indicating its own radio zone, said location registration area consisting of a plurality of radio zones;
detecting in said mobile communications terminal its location in a radio zone of one of said one or said plural specific base stations when having received said radio-zone information notifying signal;
transmitting, from said mobile communications terminal that has detected its location in said radio zone of said one base station, a request signal for requesting a location registration process to said one base station;
receiving in said one base station said request signal; and
performing, in said mobile communications network, a location registration process of generating information on a present location of said mobile communications terminal in said radio zone of said one base station based on said request signal received by said one base station.

2. A location registration method according to claim 1, further comprising the step of deleting the present location information generated by said step of performing said location registration process.

3. A location registration method according to claim 1, wherein said mobile communications terminal is a portable telephone which performs voice communications by radio.

4. A location registration method for registering a location of a mobile communications terminal served by a mobile communications network comprising the steps of:
broadcasting, from a radio transmission device sited in each of one or plural specific base stations which constitute a radio zone corresponding to a part of a location registration area, a radio-zone information notifying signal indicating said radio zone of each specific base station, said location registration area consisting of a plurality of radio zones;
detecting in said mobile communications terminal its location in a radio zone of one of said one or said plural specific base stations when having received said radio-zone information notifying signal;
transmitting, from said mobile communications terminal that has detected its location in said radio zone of said one base station, a request signal for requesting a location registration process to said one base station;
receiving in said one base station said request signal; and
performing, in said mobile communications network, a location registration process of generating information on a present location of said mobile communications terminal in said radio zone of said one base station based on said request signal received by said one base station.

5. An information distribution method for distributing information to a mobile communications terminal served by a mobile communications network through said mobile communications network comprising the steps of:
broadcasting, from each of one or plural specific base stations which constitute a radio zone corresponding to a part of a location registration area, a radio-zone information notifying signal indicating its own radio zone, said location registration area consisting of a plurality of radio zones;
detecting, in said mobile communications terminal, its location in a radio zone of one of said one or said plural specific base stations when having received said radio-zone information notifying signal;
transmitting, from said mobile communications terminal that has detected said location in said radio zone of said one base station to said one base station, a request signal for requesting a location registration process;
receiving in said one base station said request signal;
performing, in said mobile communications network, a location registration process of generating information on a present location of said mobile communications terminal in said radio zone of said one base station based on said request signal received by said one base station; and
distributing, from an information distribution server, information to said mobile communications terminal located in said radio zone of said one base station, after designating said mobile communications terminal based on the present location information generated by said location registration process.

6. An information distribution method according to claim 5, further comprising the step of deleting said present location information generated by said step of performing said location registration process.

7. An information distribution method according to claim 6, wherein said step of deleting said present location information deletes said present location information when said mobile communications terminal moves out of that radio zone in which said mobile communications terminal has been located.

8. An information distribution method according to claim 6, wherein said step of deleting said present location information deletes said present location information when distribution of the provided information by said step of distributing said information is completed.

9. An information distribution method according to claim 5, wherein said radio-zone information notifying signal includes base-station identification information for uniquely specifying each of said one or plural specific base stations.

10. An information distribution method according to claim 5, wherein said present location information is information including base station identification information and terminal identification information linked with each other, said base station identification information uniquely specifying said one specific base station and said terminal identification information uniquely specifying said mobile communications terminal.

11. An information distribution method according to claim 5, wherein said mobile communications terminal is a portable telephone which performs voice communications by radio.

12. An information distribution method for distributing information to a mobile communications terminal served by a mobile communications network through said mobile communications network comprising the steps of:
broadcasting, from a radio transmission device sited in each of one or plural specific base stations which constitute a radio zone corresponding to a part of a location registration area, a radio-zone information notifying signal indicating its own radio zone of each specific base station, said location registration area consisting of a plurality of radio zones;
detecting, in said mobile communications terminal, its present location in a radio zone of one of said one or said plural specific base stations when having received said radio-zone information notifying signal;
transmitting, from said mobile communications terminal that has detected said location in said radio zone of said one base station, a request signal for requesting a location registration process to said one base station;
receiving in said one base station said request signal;
performing, in said mobile communications network, a location registration process of generating information on a present location of said mobile communications terminal in said radio zone of said one base station based on said request signal received by said one base station; and
distributing, from an information distribution server, information to said mobile communications terminal located in said radio zone of said specific base station, after designating said mobile communication terminal based on the present location information generated by said location registration process.

13. An information distribution method for distributing information to a mobile communications terminal served by a mobile communications network through said mobile communications network comprising the steps of:
transmitting, from said mobile communications terminal, a call signal for calling another communications terminal;
receiving said transmitted call signal in one of one or plural specific base stations which constitute a radio zone corresponding to a part of a location registration area, said location registration area consisting of a plurality of radio zones;
performing, in said mobile communications network, a location registration process of generating information on a present location of said mobile communications terminal in said radio zone of said one base station based on said call signal received by said one base station; and
distributing, from an information distribution server, said mobile communications terminal located in said radio zone of said one base station, after designating said mobile communications terminal based on the present location information generated by said location registration.

14. An information distribution method for distributing information to a mobile communications terminal served by a mobile communications network through said mobile communications network comprising the steps of:
transmitting, from said mobile communications terminal, a request signal for requesting information distribution including its own identification information;
receiving said request signal in a base station constituting a radio zone in which said mobile communications terminal is located;
transferring said request signal, from said base station that has received said request signal to a given information distribution server, after affixing its own identification information to said request signal; and
distributing information from said information distribution server to said mobile communication terminal after specifying a location of said mobile communications terminal which has requested said information distribution based on said identification information of said base station affixed to said request signal and said identification information of said mobile communications terminal included in said request signal.

15. An information distribution method according to claim-14, further comprising the step of replacing said identification information of said base station affixed to said request signal with location information indicating a position at which said base station is located.

16. An information distribution method according to claim 14, wherein said information distribution server is provided outside said mobile communications network.

17. A mobile communications network for performing a location registration process of generating present location information of a mobile communications terminal comprising:
signal broadcasting means for broadcasting, from each of one or plural specific base stations that constitute a radio zone corresponding to a part of a location registration area, a radio-zone information notifying signal indicating its own radio zone, said location registration area consisting of a plurality of radio zones;
signal broadcasting means for broadcasting a radio-zone information notifying signal indicating its own radio zone of one of said one or plural specific base stations through said each of said one or plural specific base stations;
signal reception means for receiving through said one base station a request signal for requesting a location registration process transmitted from a mobile communications terminal which has received said radio-zone information notifying signal from said one base station; and
location registration means for performing a location registration process of generating information on a present location of said mobile communications terminal in said radio zone of said one base station based on said request signal received by said one base station.

18. A mobile communications network according to claim 17, further comprising location registration deleting means for deleting said present location information generated by said location registration means.

19. A mobile communications network according to claim 17, wherein said mobile communications terminal is a portable telephone which performs voice communications by said radio communication.

20. A mobile communications network for performing a location registration process for generating present location information of a mobile communications terminal comprising:
a radio transmission device for transmitting a predetermined radio signal, said radio transmission device being sited in each of radio zones of one or plural specific base stations that constitute a radio zone corresponding to a part of a location registration area, said location registration area consisting of a plurality of radio zones;
signal reception means for receiving through said one base station a request signal for requesting a location registration process, said request signal being transmitted from a mobile communications terminal which has received said transmitted radio signal; and
location registration means for performing a location registration process of generating information on a present location of said mobile communications terminal in said radio zone of said one base station based on said request signal received by said one base station.

21. A mobile communications terminal served by a mobile communications network comprising:
a memory for storing identification information of said mobile communications terminal itself;
signal reception means for receiving a radio-zone information notifying signal indicating a radio zone of one of said one or plural specific base stations, said radio-zone information notifying signal being transmitted from each of one or plural specific base stations that constitute a radio zone corresponding to a part of a location registration area, said location registration area consisting of a plurality of radio zones; and
signal transmission means for transmitting, to said one base station, a request signal for requesting a location registration process of performing location registration by generating a present location information in said radio zone in response to the reception of said radio-zone information notifying signal, after including said stored identification information in said request signal.

22. A mobile communications terminal according to claim 21, further comprising means for transmitting said base station a request signal for requesting deletion of said present location information generated by said location registration process.

23. A mobile communications terminal according to claim 21, wherein said mobile communications terminal is a portable telephone which performs voice communications by radio.

24. A mobile communications terminal served by a mobile communications network comprising:
a memory for storing identification information of said mobile communications terminal itself;
signal reception means for receiving a radio-zone information notifying signal indicating its own radio zone of said base station, said radio-zone information notifying signal being transmitted from a given radio-signal transmission device sited in each of individual radio zones of each of one or plural specific base stations that constitute a radio zone corresponding to a part of a location registration area and said location registration area consisting of a plurality of radio zones; and
signal transmission means for transmitting a request signal for requesting a location registration process of performing location registration by generating information on a present location in said radio zone in response to the reception of said radio-zone information notifying signal, after including said stored identification information in said request signal.
